# EUROPEAN PATENT APPLICATION

(11) **EP 1 939 035 A2**
(43) Date of publication of application: **02.07.2008**
(21) Application number: 07380382.7
(22) Date of filing: 27.12.2007
(51) Int. Cl.: B60N 3/10, B60R 7/04

(54) **Front console for vehicles**

(30) Priority: 27.12.2006 ES 200602779 U
(71) Applicant: Seat, S.A., 08760 Martorell (ES)
(72) Inventor: Sánchez Rubio, Sergio, c/o Seat, S.A., 08760 Martorell (Barcelona) (ES); Romero Alcocer, Alberto, c/o Seat, S.A., 08760 Martorell (Barcelona) (ES); Lanero Caja, Jorge, c/o Seat, S.A., 08760 Martorell (Barcelona) (ES)
(74) Representative: Carvajal y Urquijo, Isabel

(57) **Abstract**

The invention relates to a front console for vehicles, formed by a cover (1) delimiting a chamber through which aeration conduits run. The cover delimits cavities (4) which are used as cup holders, which are limited inside the chamber by a tray (7) the bottom of which includes a grate (11), under which a collector is formed in which branches of the aeration conduits open out.

## Description

### Field of the Invention

The present invention relates to a front console for vehicles, which is arranged at the front part of the interior, on the bottom thereof, in a considerable centered position, and from which the gear lever projects.

More specifically, the console of the invention is of the type forming at its upper base a series of housings which are useful as cup holders and as receptacles for small objects such as wallets, keys, coins, etc.

### Background of the Invention

Consoles of the indicated type are already known, which are formed by a cover, the base of which has a front opening in which the gear lever support or protector is coupled and behind which there are a series of cavities which are shaped such that they are useful as cup holders and as receptacles for small objects.

Aeration conduits for the rear area of the interior run along the inside of this cover.

The cavities intended to serve as cup holders are sized to stably house a glass or bottle with a beverage, but they lack means which allow adjusting the temperature of such beverages, which is a very desirable condition for cooling water and soft drinks.

There are different solutions for adjusting the temperature of beverages, such as air conditioned glove boxes or compartments, all of which are closed and exclusively designed to adjust the temperature of the elements deposited inside them or glove compartments, all of these solutions require a special installation and therefore have a relatively high cost.

DE-20216677-U discloses a system for cooling beverages through an air stream, requiring a specific design and geometry, which requires certain manufacturing operations and times, all of which makes its cost excessively high.

### Description of the Invention

The object of the present invention is to eliminate the mentioned drawbacks by means of a front console for vehicles, of the type set forth, having means of adjusting the temperature of glasses or containers arranged in the cavities intended to be used as cup holders, and all of this without considerably altering the constitution, design and assembly of the traditional elements of the console.

To that end, according to the present invention, the cavities of the console intended to be used as cup holders are limited inside the chamber forming the console by a tray or enclosure having at the bottom an opening in which there is coupled a lower collector, branches of the aeration conduits passing through the console opening out into such collector. The mentioned collector is closed at the upper part by means of a grate through which the collector communicates with the tray.

Thus, based on a small modification of the aeration conduits, part of the air stream penetrating the collector is diverted and, through the upper grate, it passes to the tray limiting the cavities intended as cup holders and on which the containers or glasses containing the beverages will be supported. Part of the diverted air stream of the aeration tubes comes into contact with the container or glass containing the beverage, achieving an energy transfer whereby the temperature of the beverage will be increased or decreased, according to the temperatures of the air stream and of the beverage.

With the described constitution, it will be necessary to provide the aeration conduits with a small branch which will open out into the collector, thus maintaining the temperature of the beverage for a longer time. Furthermore, it is technically possible to change the temperature of the beverage, which will depend on the air conditioning temperature of the vehicle.

The proposed solution is simple, with a very low manufacturing cost, and it does not have design, geometry or assembly problems, because it interacts with the surrounding elements. This involves not having to carry out modifications in the outer parts nor sacrificing other spaces to be able to incorporate the temperature adjustment system in the cavities intended to be used as armrests.

The cover forming the console will preferably have two cavities intended as cup holders, which will be transversely aligned and limited by a common tray which, together with the collector, will run in a transverse direction inside the chamber. The collector will be provided in the transverse walls with respective openings through which many other branches of the aeration conduits will open out.

The collector will adopt a configuration in the form of a hopper, the upper base being closed by means of the intercommunication grate, this grate being removable to facilitate cleaning the entire system. The lower base of the hopper can be formed by a removable lid which allows cleaning the inside of the aeration conduit or for removing certain possible parts that may have fallen through the grate.

To assure the assembly of the different components, the walls of the collector can be finished at the upper part in an outer flange seated in a step formed by the edge of the opening. This step can be extended, at least in the sections corresponding to the transverse or smaller edges of the opening, in a horizontal flange which is located under the step. This flange has holes or grooves through which pins project at the lower part from the flange of the collector. Securing clips are arranged between the holes or grooves of the flange surrounding the opening of the tray and the pins of the collector.

### Brief Description of the Drawings

The attached drawings show an embodiment of the console, given by way of a non-limiting example, and with reference to which a more detailed description is made.

In the drawings:
Figure 1 is a perspective view of a console formed according to the invention.
Figure 2 is a view similar to Figure 1, in which the lid of the cover forming the console has been eliminated.
Figure 3 is a perspective view of the central area inside the cover, forming the tray or enclosure which will be used as a cup holder.
Figure 4 is a cross-section of the console, taken according to section line IV-IV of Figure 2.
Figure 5 is a perspective view of the collector assembled inside the cover of the console, under the tray of Figure 3.
Figure 6 is a perspective view of the aeration conduits running along inside the cover of the console.
Figure 7 corresponds to detail A of Figure 4, on a larger scale.

### Detailed Description of an Embodiment

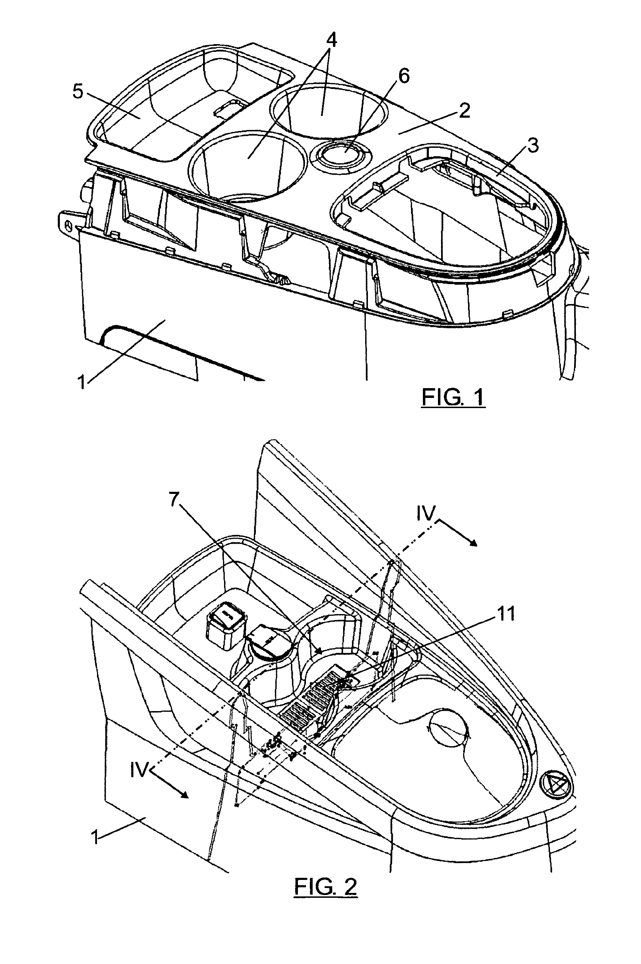

Figure 1 shows a console formed according to the invention, which is formed by a cover including a side wall 1 and an upper lid 2. This lid has a front opening 3 on which the support of the gear lever will be coupled. Behind this opening, the lid 2 forms two cavities with a circular contour and a rear cavity 5 with an approximately rectangular contour. The first two cavities are intended to be used as cup holders, whereas cavity 5 is useful as a receptacle for arranging small objects, such as keys, coins, etc. The lid 2 can further have an intermediate opening 6 for an electric lighter or the like.

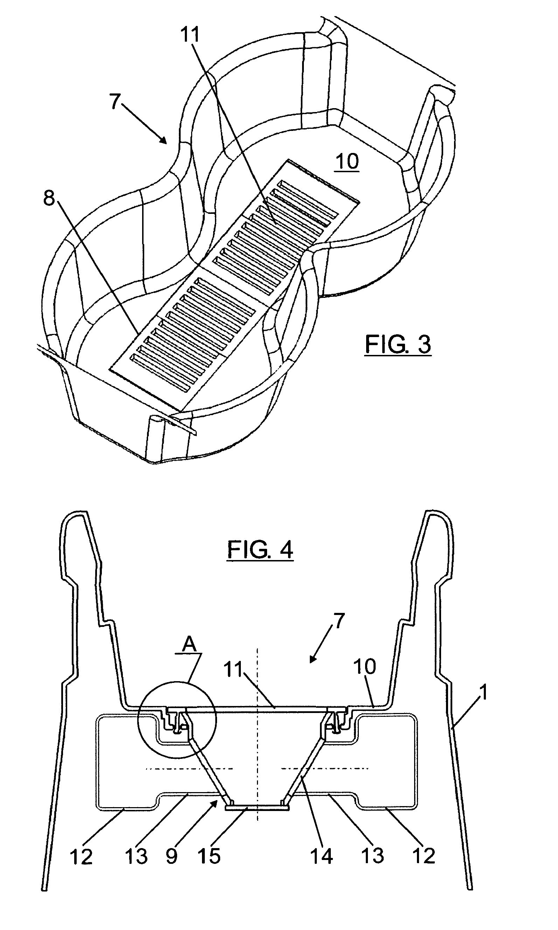

The walls and bottom of the rear cavity 5 can form part of the actual lid 2, whereas the walls and bottom of the circular cavities 4 are defined by a tray or enclosure 7, Figure 2, forming part of the side walls 1 of the console, as an extension thereof, as can best be seen in Figure 4. The tray or enclosure 7 runs inside the console in a transverse direction and cup holder 4 is common for the two housings, which cup holder can adopt the configuration shown in Figure 3. This tray has at the bottom an opening 8 in which there is coupled, as shown in Figure 4, a collector 9 which is located under the bottom 10 of the tray 7.

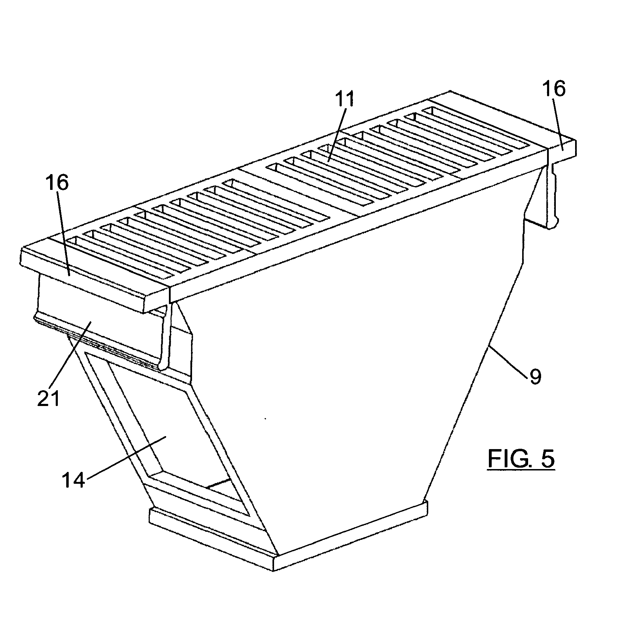

As can best be seen in Figure 5, the collector 9 can adopt the form of a hopper and its upper base is closed by means of a grate 11 through which said hopper communicates with the tray 10. This grate will be removable for facilitating the inner cleaning of the collector 9.

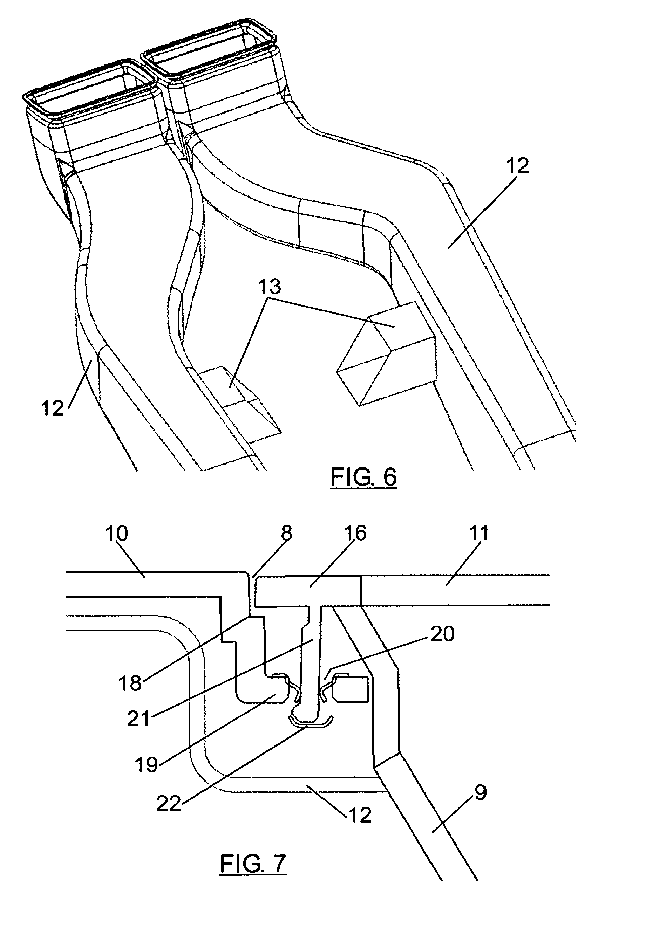

Aeration conduits 12, which are shown in perspective in Figure 6, run along inside the cover forming the front console of the vehicle. Each of these conduits runs along one side of the collector 9 and has respective branches 13 opening out inside the collector 9 through openings 14, Figure 5, made in the smaller walls of said collector.

The lower base of the collector 9 can be formed by a removable lid 15, Figure 4.

The walls of the collector, at least the smaller walls, are finished at the upper part in an outer flange 16, Figures 5 and 7, seated in a step 18 formed by the corresponding edge of the opening 8. This step 18 can extend in a horizontal flange 19 which is located under the step and has a groove 20 through which a continuous pin 21 is introduced, which pin projects at the lower part of the flange 16 of the collector. A clip 22 which will be useful as an element for retaining the continuous pin 20 can be coupled in groove 20.

With the mentioned constitution, part of the air stream which will circulate through the aeration conduits 12 is diverted through branches 13, to penetrate the collector 9, from where it passes through grate 11 to tray 7, to cool or heat the containers containing beverages located in the cavities 4 of the console. This, by means of a slight modification of the aeration conduits, consisting of providing them with branches 13, and by means of arranging the collector 9, the temperature of the beverages contained in the containers located in the cavities 4 is adjusted.

The lower area of the console can be cleaned by means of the lid 15 closing the lower base of the collector 9. It is also possible to incorporate a lid or gate for opening or closing the passage of air towards the collector 9.

## Claims

1. A front console for vehicles, which is formed by a cover delimiting a chamber through which aeration conduits (11) run and the upper base (2) of which has an upper opening (3), in which the support of the gear lever, and a series of cavities (4-5) which are used as cup holders and as a receptacle for small objects are coupled, **characterized in that** the cavities (4) intended as cup holders are limited inside the chamber by a tray or enclosure (7) having at the bottom an opening (8) in which a lower collector (9) is coupled, branches (13) of the mentioned aeration conduits opening out into such collector; the collector of which is closed at the upper part by means of a grate (11) through which said collector communicates with the tray.

2. A console according to claim 1, **characterized in that** it comprises two cavities (4) intended as cup holders, which are transversely aligned and limited by a common tray (7) running, together with the collector (9), in an also transverse direction inside the chamber, said collector having in its transverse walls respective openings (14) through which as many other branches (13) of the aeration conduits (12) open out.

3. A console according to the previous claims, **characterized in that** the mentioned collector adopts the form of a hopper with a rectangular base, the upper base of which is closed by means of the mentioned grate (11) and the lower base of which is formed by a removable lid (15).

4. A console according to the previous claims, **characterized in that** the smaller walls of the collector are finished at the upper part in an outer flange (16) seated in a step (18) formed by the smaller edges of the opening (8).

5. A console according to claim 4, **characterized in that** the mentioned steps (18) extend in a horizontal flange (1), located under said steps, having a longitudinal groove (20) through which a continuous pin (21) projecting at the lower part from the flanges of the collector is introduced.

6. A console according to claim 5, **characterized in that** a clip (22) for securing the continuous pins (21) of the collector is coupled in the grooves of the flanges of the smaller sides of the opening of the tray
